# EUROPEAN PATENT SPECIFICATION

(11) **EP 3 533 627 B1**
(45) Date of publication and mention of the grant of the patent: **28.04.2021**
(21) Application number: 17863898.7
(22) Date of filing: 08.06.2017
(51) Int. Cl.: B60C 11/16

(54) **STUD PIN AND PNEUMATIC TIRE PROVIDED WITH STUD PIN**
SPIKESTIFT UND LUFTREIFEN MIT SPIKESTIFT
TIGE DE GOUJON ET PNEU POURVU DE LADITE TIGE DE GOUJON

(30) Priority: 26.10.2016 JP 2016209193
(43) Date of publication of application: 04.09.2019
(73) Proprietor: TOYO TIRE CORPORATION, Itami-shi, Hyogo 6640847 (JP)
(72) Inventor: OMIYA, Masatoshi, Hyogo 664-0847 (JP)
(74) Representative: Eisenführ Speiser
(86) International application number: PCT/JP2017/021232
(87) International publication number: WO 2018/078936

(56) References cited:
- JP-A- 2013 023 111
- JP-A- 2014 180 952
- JP-A- 2016 078 482
- JP-A- 2016 097 836
- RU-C1- 2 148 498
- US-A1- 2013 000 807

## Description

### TECHNICAL FIELD

The present invention relates to a stud pin, and a pneumatic tire comprising the stud pin.

### BACKGROUND ART

RU 2148498 C1 proposes an anti-skid stud that has a body with a support flange accommodating a wear-resistant insert made of hard material and projecting through required height. The insert is made in form of a truncated cone. The Body is made of a polymeric material or a material on base of high-molecular compounds and with members for spatial orientation along a longitudinal axis. The insert is fitted in body by its base, with a truncated cone top pointing outwards. The insert is made in form of body with limited number of symmetry planes in the longitudinal direction. The stud body support flange is made asymmetrical relative to at least one plane passing through the longitudinal axis of anti-skid stud and is used as member of spatial orientation of the body in the longitudinal axis.

Conventionally, as a stud pin, one having a constitution that includes a body having a trapezoidal shape in a plan view and a pin protruding from an upper surface of the body and having one side surface shaped in a convex is known (see Patent Literature 1).

### CITATION LIST

### PATENT LITERATURE

Patent Literature 1: WO 2014/122570 A1

### SUMMARY OF INVENTION

### TECHNICAL PROBLEM

However, in the above-described conventional stud pin, since the body and its base are trapezoidal in a plan view, the degree of adhesion with pin holes of a tire to be mounted with the stud pin is variable. Therefore, when a force is applied to the stud pin from the road surface with the stud pin being mounted in a pin hole of a tire, the stud pin is likely to fall out of the pin hole of the tire.

An object of the present invention is to provide: a stud pin which has excellent resistance to falling out of a pin hole of a tire and is capable of performing a sufficient edge effect on a road surface; and a pneumatic tire comprising the stud pin.

### SOLUTION TO PROBLEM

As means for solving the above-described problem, the present invention provides a stud pin as defined in claim 1.

According to the present invention, in a state where the stud pin is mounted in a pin hole of a tire, the cylindrical surface of the body and the arc-shaped part of the base easily fit to the inner surface of the pin hole. In addition, since the arc-shaped part of the base is formed concentrically with the center axis of the body, a retaining force applied to the cylindrical surface of the body from the pin hole and a retaining force applied to the arc-shaped part of the base from the pin hole both act in such a manner to align the center axis of the stud pin with the center axis of the pin hole. Therefore, high retainability is achieved by the pin hole.

Moreover, since the base is formed asymmetrically formed, with respect to the transverse axis, in the longitudinal axis direction, a resistance against falling off can be improved in a specific direction depending on the mounting orientation in the pin hole. Particularly, since the base comprises the arc-shaped part on one end of the longitudinal axis direction, i.e., the base is bulged in the longitudinal axis direction when viewed from the center axis direction (hereinafter, this condition may also be referred to as "in a plan view"), tilting in the longitudinal axis direction is likely to be suppressed, whereby the resistance against falling off in the longitudinal axis direction can be improved.

In the above-described manner, the stud pin is configured to have appropriate retainability; therefore, the body can sufficiently exert an edge effect on one end thereof through its outer periphery.

The base has a greater length in the longitudinal axis direction than in the transverse axis direction in a plan view.

According to this constitution, in a state where the stud pin is mounted in a pin hole of a tire, the base receives a stronger retaining force in the longitudinal axis direction from the inner surface of the pin hole. Therefore, an appropriate resistance against falling off can be ensured against a force acting in the longitudinal axis direction of the stud pin.

The base may, on the respective sides of its longitudinal axis in a plan view, have a pair of inclined parts that are inclined to the side of the longitudinal axis toward the other end and extend along the longitudinal axis direction.

According to this constitution, in a state where the stud pin is mounted in a pin hole of a tire, the pair of inclined parts strongly bites into the inner surface of the pin hole, and a reaction force thereof strongly holds the stud pin. In addition, corners are formed at the end of the longitudinal axis direction of the respective inclined parts, and rotation of the stud pin about the center axis is suppressed by these corners. Accordingly, for example, during turning and the like, the corners suitably resist to rotation of the stud pin about the center axis; therefore, the position of the stud pin in the rotational direction around the center axis is maintained, whereby an improved the resistance against falling off can be sustained in a specific direction depending on the mounting orientation.

The inclined parts may be positioned on the other end side in the longitudinal axis direction with respect to the transverse axis.

According to this constitution, the arc-shaped part of the base can be configured to be large; therefore, in a state where the stud pin is mounted in a pin hole of a tire, a large adhesion surface is likely to be ensured between the arc-shaped part and the inner surface of the pin hole, so that the retainability achieved by the pin hole can be improved.

The base may be formed in such a manner to extend from the body in its whole circumference in a plan view.

According to this constitution, in a state where the stud pin is mounted in a pin hole of a tire, since a hooking effect is exerted by the base in the entire circumferential direction, the resistance against falling off due to the base can be improved.

The body may also have a tapered surface on the upper-end periphery.

According to this constitution, when driving on a dry road surface, the tapered surface of the body is likely to make a surface contact with the road surface. With this arrangement, the impact of the stud pin against the road surface upon contact can be mitigated. Therefore, the occurrence of road surface cracking and the like can be suppressed.

As another means for solving the above-described problem, the present invention provides a pneumatic tire comprising: a stud pin having any one of the above-described constitutions; and pin holes which are formed on a tread portion and in which the stud pin is mounted.

### ADVANTAGEOUS EFFECTS OF INVENTION

According to the present invention, in the stud pin and the pneumatic tire comprising the same, the stud pin and its body are cylindrically formed and the base has an arc-shaped part; therefore, a high degree of adhesion is attained between the stud pin and the inner surface of each pin hole, whereby the retainability of the stud pin can be improved. Further, since the base has a shape that is asymmetrical in the longitudinal axis direction, the retainability can be improved in various directions in accordance with the difference in the mounting orientation in the pin holes. Consequently, the body, on the side of one end, can sufficiently perform an edge effect due to its upper-end periphery.

### BRIEF DESCRIPTION OF DRAWINGS

FIG. 1 is a perspective view illustrating a stud pin according to one embodiment of the present invention.
FIG. 2 is a front view of the stud pin illustrated in FIG. 1.
FIG. 3 is a plan view of the stud pin illustrated in FIG. 1.
FIG. 4 is a developed view of a tread portion of a tire on which the stud pin illustrated in FIG. 1 is mounted.
FIG. 5 is a cross-sectional view of one of the pin holes illustrated in FIG. 4.

### DESCRIPTION OF EMBODIMENTS

Embodiments of the present invention will now be described referring to the attached drawings. In the following descriptions, terms each indicating a specific direction or position (e.g., terms including "upper", "lower", "side", "end") are used as necessary. These terms are used to facilitate the understanding of the invention with reference to the drawings, and the technical scope of the present invention should not be limited by the meanings of these terms. Further, the descriptions provided below are essentially nothing but exemplifications of the present invention and are not intended to limit the present invention, its application, or its use. Moreover, the drawings are schematic, and the dimensional ratios and the like differ from the actual ones.

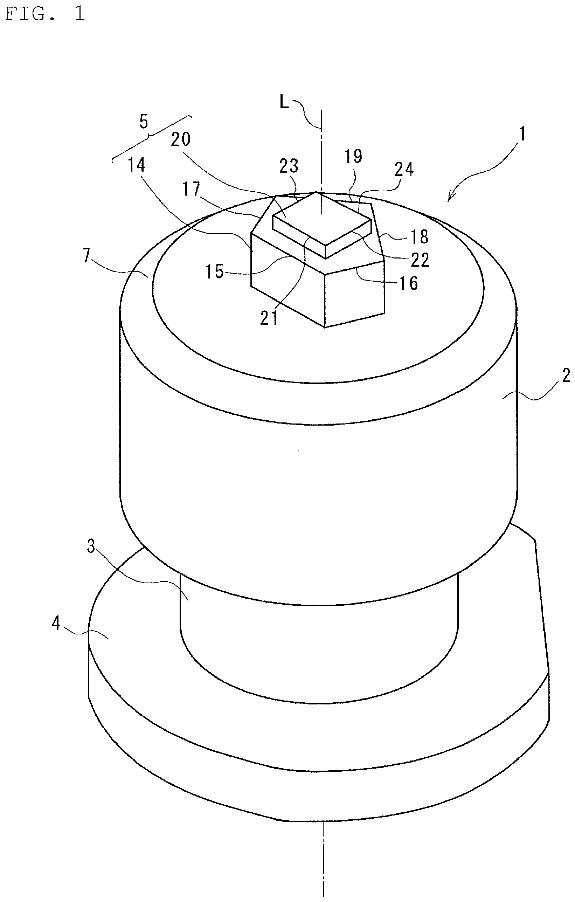

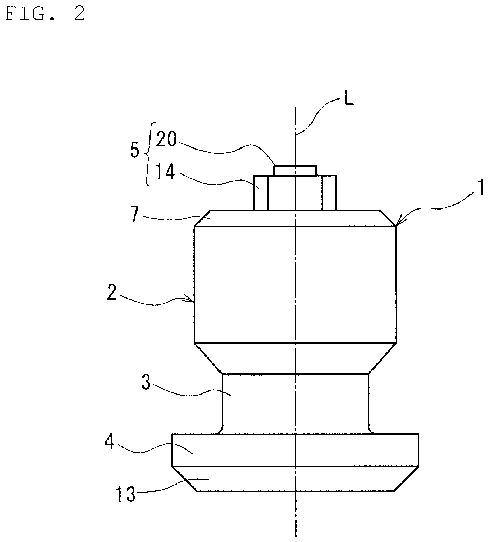

FIGs. 1 and 2 illustrate a stud pin 1 according to one embodiment of the present invention. The stud pin 1 is formed by, for example, molding aluminum, an aluminum alloy or the like, and is constituted by: a body 2; a shank 3 extending on a lower side of the body 2; a base 4 further extending on a lower side of the shank 3, and a shaft 5 arranged on a center part of the upper surface of the body 2.

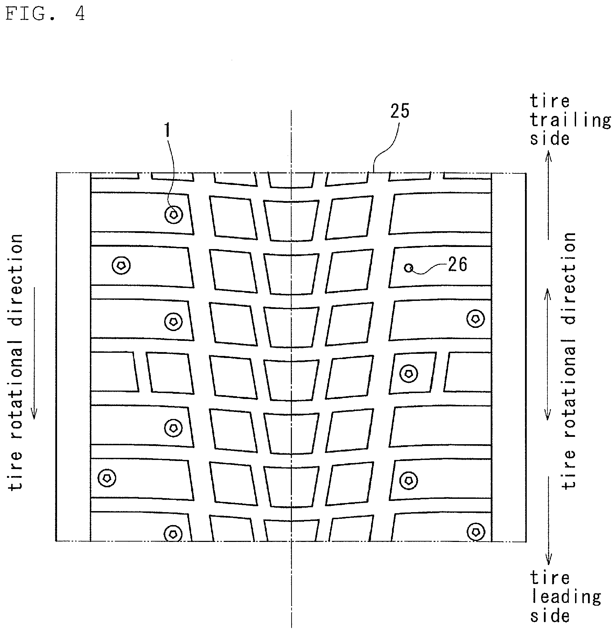

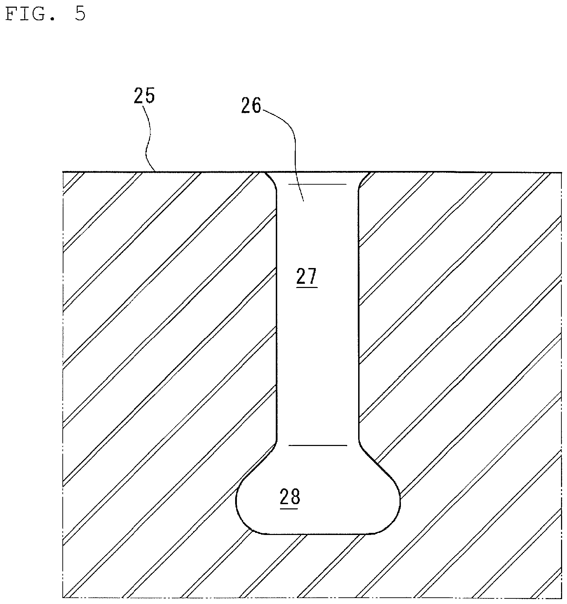

The body 2 is formed in a cylindrical shape that extends along a center axis L. The term "center axis L" used herein means a center, assuming that the body 2 has a true circular shape in a plan view. By forming the body 2 in a cylindrical shape, when the stud pin is mounted in pin holes 26 of a pneumatic tire as described below (see FIGs. 4 and 5), the outer circumferential surface (cylindrical surface) of the body 2 can be tightly adhered to the inner circumferential surface of each pin hole 26, so that the mounted state can be stabilized and the resistance against falling off can thereby be improved.

The term "cylindrical (shape)" used herein is not restricted to a true circle in a plan view and encompasses slightly deformed elliptical shapes and the like, as well as polygonal shapes connected by plural line segments in a plan view. When the body 2 has a polygonal shape, it is required that the length of each line segment be sufficiently short to make the polygonal shape nearly circular such that the body 2 substantially uniformly adheres to the inner surface of each pin hole 26. In this manner, the term "cylindrical (shape)" generally means a figure bounded by a curved line, such as a true circle or an ellipse in a plan view, or a figure bounded by short line segments, such as a polygon. In short, the term "cylindrical (shape)" may be any shape as long as it can improve the adhesion with the inner surface constituting the pin hole 26 over its entire surface.

The upper-surface periphery of the body 2 is constituted by a tapered surface 7. The tapered surface 7 is a region that initially comes into contact with the road surface when a pneumatic tire (stud tire) on which the stud pin 1 is mounted is driven on a road. By forming the tapered surface 7, the body 2 is allowed to make a surface contact when coming into contact with the ground and a concentrated load is thus made less likely to be generated on the road surface, so that the occurrence of a problem, such as road surface cracking, can be inhibited.

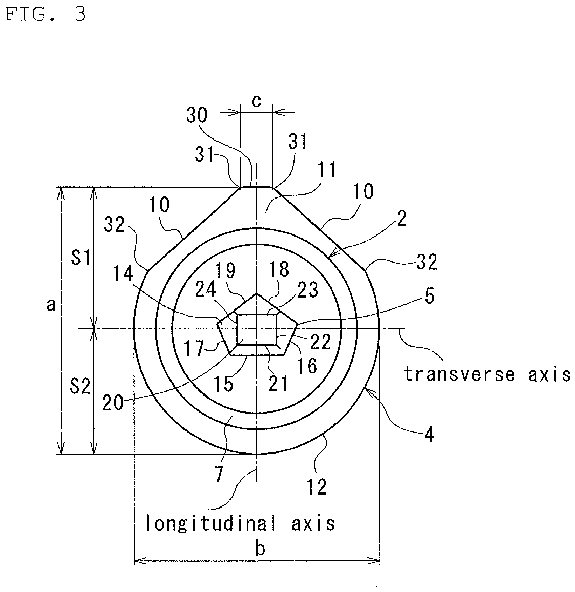

As illustrated in FIG. 3, the base 4 is formed in a longitudinally elongated shape whose maximum length "a" in the longitudinal axis direction (dash-dotted line extending in the up-down direction in the drawing) and maximum length "b" in the transverse axis direction (dash-dotted line extending in the left-right direction in the drawing) satisfy a > b in a plan view. In other words, the direction in which the base 4 has the largest length is referred to as "longitudinal axis direction". The longitudinal axis direction and the transverse axis direction may be hereinafter referred to as "longitudinal direction" and "transverse direction", respectively. On the one end side in the longitudinal direction of the base 4, an arc-shaped part 12 centered on the center axis L is formed. Further, in the base 4, a protruding part 11 which protrudes in a triangular shape is formed by two inclined parts 10 on the other end side in the longitudinal direction. In this embodiment, the protruding part 11 is bilaterally symmetrical with respect to the longitudinal axis. In addition, an angle formed by each inclined part 10 with the longitudinal axis is set to be smaller than 90°, and this angle is particularly preferably 45°. In other words, in a plan view, the base 4 is constituted by the arc-shaped part 12, the inclined parts 10, and the protruding part 11. Further, the base 4, in a plan view, has a first region S1 and a second region S2 divided into two regions by the transverse axis in the longitudinal axis direction. The inclined parts 10 and the protruding part 11 are formed in the first region S1 but not in the second region S2. Meanwhile, the arc-shaped part 12 is formed in such a manner to be connected to the inclined parts 10, extending from the entirety of the second region S2 to a part of the first region S1. In other words, the inclined parts 10 are not formed in such a manner to extend over both the first region S1 and the second region S2. Moreover, the base 4 is formed in such a manner to extend to the outer side from the body 2 in its whole circumference in a plan view. On the lower surface of the outer periphery of the base 4, a tapered surface 13 is formed (see FIG. 2).

On the other end in the longitudinal direction of the protruding part 11, a linear part 30 extending in parallel to the transverse axis is formed. First corner 31 are formed between the respective inclined parts 10 and the linear part 30, and second corners 32 are formed between the respective inclined parts 10 and the arc-shaped part 12. The first corners 31 and the second corners 32 can perform a rotation suppressing effect, which suitably resists to rotation of the stud pin 1 about the center axis L, by catching and holding onto the inner surface of the pin hole 26. The length c of the linear part 30 in the transverse axis direction is set to be 10% to 75%, preferably 20% to 50%, of the maximum length b of the base 4 in the transverse axis direction. By setting the linear part 30 in this manner, the first corners 31 and the second corners 32 can be configured to have prescribed angles, so that the above-described rotation suppressing effect of the stud pin 1 can be effectively achieved.

The shaft 5 comprises a first protrusion 14 which has an odd-numbered polygonal shape in a plan view (a pentagonal shape in this case). A first edge 15 of the first protrusion 14 is positioned on the one end side in the longitudinal axis direction and extends in parallel to the transverse axis. A second edge 16 and a third edge 17, which are adjacent to the first edge 15 on the respective sides thereof, face the arc-shaped part 12 of the base 4. Further, a fourth edge 18 adjacent to the second edge 16 and a fifth edge 19 adjacent to the third edge 17 face the respective inclined parts 10 of the base 4.

On the upper surface of the first protrusion 14, a second protrusion 20 is formed. The second protrusion 20 has a rectangular shape in a plan view, and one of its long sides constitutes a sixth edge 21, which is parallel to the first edge 15 of the first protrusion 14. It is noted here that other edges of the second protrusion 20 (a seventh edge 22, an eighth edge 23, and a ninth edge 24) extend in different directions from the other edges of the first protrusion 14.

The shaft 5 is arranged such that its center axis is aligned with the center axis of the body 2. With this arrangement, a sufficient distance can be ensured between the outer periphery of the body 2 and the shaft 5 in all directions. In addition, the second protrusion 20 has a smaller number of edges than the first protrusion 14. Specifically, the first protrusion 14 has five edges, while the second protrusion 20 has four edges. Moreover, in this embodiment, the height of the shaft 5 is 0.5 mm to 2.5 mm. The reason for this is that in case at a height of less than 0.5 mm, the shaft 5 cannot sufficiently perform its functions, and that in case at height of greater than 2.5 mm, the shaft 5 contacts the ground before the body 2 and is thus likely to be damaged. Furthermore, the height ratio of the second protrusion 20 with respect to the first protrusion 14 is set to be 10% to 80%. The edge effect of the second protrusion 20 is insufficient when the height ratio is lower than 10%, and the first protrusion 14 cannot sufficiently perform an edge effect when the height ratio is higher than 80%.

By configuring the shaft 5 to have two steps in this manner, the total edge length can be increased, so that a sufficient edge effect can be achieved. In addition, since the edges of the first and the second protrusions 14 and 20 that extend in various directions collide with the road surface, an edge effect can be achieved not only in a straight forwarding direction but also in various directions during turning and the like. It is noted here that the shaft 5 may be constituted by three or more steps as well.

As illustrated in FIG. 4, the stud pin 1 having the above-described constitution is used by being mounted into the pin holes 26 formed on a tread portion 25 of a stud tire. As illustrated in FIG. 5, the pin holes 26 are each constituted by a small-diameter part 27 having a fixed inner diameter and a large-diameter part 28 on the tip thereof. An operation of mounting the stud pin 1 into each pin hole 26 is automatically performed by a pin driving device (not illustrated). In this case, the base 4 has the above-described longitudinally elongated heterogeneous shape, not a point-symmetrical shape such as a circular shape; therefore, the orientation of the stud pin 1 can be easily understood and the stud pin 1 can thus be accurately mounted into each pin hole 26. In this embodiment, the first edge 15 of the shaft 5 is positioned on the tire trailing side such that it extends in the tire widthwise direction perpendicular to the tire circumferential direction. In other words, the stud pin 1 is mounted such that the longitudinal axis of the base 4 is aligned with the tire circumferential direction. In this state, a part of the stud pin 1 above the upper end (tapered surface 7) of the body 2 is exposed from the surface of the tread portion 25.

According to the stud pin 1 mounted on a stud tire in this manner, during driving, the upper-end periphery of the body 2 initially collides with the road surface. On this upper-end periphery of the body 2, the tapered surface 7 is formed. Therefore, even when the upper-end periphery of the body 2 collides with the road surface, the impact force applied per unit area of the road surface can be reduced. As a result, problems such as road surface cracking can be avoided even when driving on a dry road surface. Moreover, since the body 2 itself is formed in a cylindrical shape, the body 2 has a sufficient strength against collision with the road surface and is thus unlikely to be damaged even in a long-term use (the body 2 is durable).

The shaft 5 subsequently collides with the road surface. In this case, a sufficient distance is secured between the body 2 and the shaft 5. Therefore, the shaft 5 is prevented from colliding with the road surface before the body 2. As a result, damage to the shaft 5 caused by collision with the road surface can be inhibited.

The shaft 5 that collides with the road surface is constituted by two steps, and the first protrusion 14 and the second protrusion 20 have surrounding sharped sides of which each directions is different from each other except at one spot. Therefore, the edge effect of the shaft 5 can be sufficiently achieved. In other words, in straight driving, the first edge 15 acts on the road surface (icy surface). Further, when making a turn, the second edge 16 or the third edge 17 inhibits skidding on the road surface. Moreover, when the brake is applied, the fourth edge 18 and the fifth edge 19 apply a braking force against the road surface.

In these processes, a force that causes the stud pin 1 to fall out of the pin hole 26 is applied from the road surface to the stud pin 1 through the body 2 and the shaft 5. The stud pin 1 comprises the shank 3 having a smaller diameter than the body 2 and the base 4 having a larger diameter than the body 2 connected to the shank 3, so that falling off of the stud pin 1 is effectively inhibited. Particularly, since the body 2 is formed in a cylindrical shape and thus tightly adheres to the inner surface constituting each pin hole 26, the resistance against falling off is improved. In addition, since the base 4 is formed in such a manner to extend to the outer side from the whole circumference of the body 2 in a plan view, the resistance against falling off is improved in this respect as well. Further, the base 4 not only is formed such that its length along the longitudinal axis is longer than the length along the transverse axis but also is mounted such that the longitudinal axis is aligned with the tire circumferential direction; therefore, the resistance against falling off can be effectively achieved against a force applied from the road surface at the start of driving as well as during braking. Moreover, the first corners 31 and the second corners 32 of the base 4 improve the resistance against falling off during turning.

Using the stud pin of Comparative Example, whose body 2 and base 4 have circular shapes in a plan view, as well as the stud pin of Example that is illustrated in FIGs. 1 to 3, the resistance against falling off and the edge performance were tested. As test tires, tires having a size of 195/65R15 and an air pressure of 220 kPa were used. In the resistance against falling off test, a wire was connected to the stud pin 1 mounted in a pin hole 26 and pulled in the front-back, oblique and lateral directions at a constant speed. The tensile force was gradually increased, and the resistance against falling off was evaluated in terms of the tensile force applied when the stud pin 1 was pulled out of the pin hole 26. In the edge performance test, the test tires were mounted on a test vehicle (1,500 cc, 4WD mid-size sedan), and this test vehicle was driven on an icy road surface to evaluate the edge performance (drive performance, braking performance and turning (cornering) performance). For the evaluation of the edge performance, Example was evaluated as an index, taking the edge performance of Comparative Example as 100. The drive performance was evaluated in terms of the elapsed time required for the driving distance to reach 30 m after starting from a stopped state on the icy road surface. The braking performance was evaluated in terms of the braking distance when a braking force was applied by ABS (Antilock Brake System) at a speed of 40 km/h. The turning performance was evaluated in terms of the turning radius when a turn was made at the same speed of 40 km/h.

The evaluation results are shown in Table 1.

**[Table 1]**

| | Comparative Example | Example |
|---|---|---|
| Shaft cross-sectional shape | | |
| First step | circular | pentagonal |
| Second step | circular | quadrangular |
| resistance against falling off | | |
| Longitudinal axis direction | 100 | 110 |
| Oblique direction | 100 | 104 |
| Transverse axis direction | 100 | 101 |
| Drive performance | 100 | 103 |
| Braking performance | 100 | 105 |
| Turning performance | 100 | 103 |

As shown above, in Example, the resistance against falling off was improved in all directions by the base 4 having a longitudinally elongated asymmetrical shape. In addition, as for the shaft 5, excellent effects were achieved by the respective edges in all of the tests of the edge effect. These edge effects were obtained because the two-step configuration enabled to freely set the directions of the edges and to increase the lengths of the edges.

The effects obtained by the constitution of the stud pin 1 according the present embodiment are summarized as follows.

According to the present embodiment, in a state where the stud pin 1 is mounted in a pin hole 26 of a tire, the cylindrical surface of the body 2 and the arc-shaped part 12 of the base 4 easily conform to the inner surface of the pin hole 26. In addition, since the arc-shaped part 12 of the base 4 is formed concentrically with the center axis L of the body 2, a retaining force applied to the cylindrical surface of the body 2 from the pin hole 26 and a retaining force applied to the arc-shaped part 12 of the base 4 from the pin hole 26 both act in such a manner to align the center axis of the stud pin 1 with the center axis of the pin hole 26. Therefore, high retainability is achieved by the pin hole 26.

Moreover, since the base 4 is formed asymmetrically, with respect to the transverse axis, in the longitudinal axis direction, the resistance against falling off can be improved in a specific direction depending on the mounting orientation in the pin hole 26. Particularly, since the base 4 has the arc-shaped part 12 on one end of the longitudinal axis direction, i.e., the base 4 is bulged in the longitudinal axis direction when viewed from the center axis direction, the resistance against falling off in the longitudinal axis direction can be improved.

In the above-described manner, the stud pin 1 is configured to have appropriate retainability; therefore, the body 2 can sufficiently perform an edge effect on one end thereof through its outer periphery.

In a state where the stud pin 1 is mounted in a pin hole 26 of a tire, the base 4 receives a stronger retaining force in the longitudinal axis direction from the inner surface of the pin hole 26. Therefore, appropriate resistance against falling off can be ensured against a force acting in the longitudinal axis direction of the stud pin 1.

In a state where the stud pin 1 is mounted in a pin hole 26 of a tire, the pair of inclined parts 10 and the protruding part 11 formed between the inclined parts 10 strongly bite into the inner surface of the pin hole 26, and a reaction force thereof strongly holds the stud pin 1. In addition, by the first and the second corners 31 and 32, rotation of the stud pin 1 about the center axis L is suppressed. Accordingly, for example, during turning and the like, these corners suitably resist to rotation of the stud pin 1 about the center axis L; therefore, the position of the stud pin 1 in the rotational direction around the center axis L is maintained, whereby an improved resistance against falling off is sustained in a specific direction depending on the mounting orientation.

By forming the arc-shaped part 12 such that it extends from the second region S2 to the first region S1, in a state where the stud pin 1 is mounted in a pin hole 26 of a tire, a large adhesion surface is likely to be ensured between the arc-shaped part 12 and the inner surface of the pin hole 26, so that the retainability achieved by the pin hole 26 can be improved.

In a state where the stud pin 1 is mounted in a pin hole 26 of a tire, since a hooking effect is achieved by the base 4 in the entire circumferential direction, the resistance against falling off due to the base 4 can be improved.

When driving on a dry road surface, the tapered surface 7 of the body 2 is likely to make a surface contact with the road surface. With this arrangement, the impact of the stud pin 1 against the road surface upon contact can be mitigated. Therefore, the occurrence of road surface cracking and the like can be suppressed.

It is noted here that the present invention is not limited to the constitutions of the above-described embodiment, and a variety of modifications can be made as claimed.

In the above-described embodiment, the first edge 15 of the first protrusion 14 of the shaft 5 is arranged on the tire trailing side such that it extends perpendicular to the tire circumferential direction along the tire widthwise direction; however, the first edge 15 may be arranged on the tire leading side as well. This makes it easier for the first edge 15 to perform a braking force.

Further, in the above-described embodiment, the shaft 5 has an odd-numbered polygonal shape in a plan view; however, the shaft 5 may also be constituted by a single linear part and other arc-shaped part. In this case, the arc-shaped part may have a substantially circular-arc shape connected by plural line segments shorter than the linear part.

### DESCRIPTION OF SYMBOLS

1: stud pin
2: body
4: base
5: shaft
7: tapered surface
10: inclined part
11: protruding part
12: arc-shaped part
13: tapered surface
14: first protrusion
15: first edge
16: second edge
17: third edge
18: fourth edge
19: fifth edge
20: second protrusion
21: sixth edge
22: seventh edge
23: eighth edge
24: ninth edge
25: tread portion
26: pin hole
27: small-diameter part
28: large-diameter part
30: linear part
31: first corner
32: second corner

## Claims

1. A stud pin (1) mounted into a pin hole (26) formed on a pneumatic tire, the stud pin (1) comprising:
a cylindrical body (2);
a shaft (5) which protrudes from one end in a center axis direction of the body (2); and
a base (4) arranged on another end in the center axis direction of the body (2), which, is an opposite end from the one end in the center axis direction, wherien the base (4) is, in a plan view, formed asymmetrically, with respect to a transverse axis perpendicular to the center axis (L), in a longitudinal axis direction perpendicular to the center axis (L) and the transverse axis, is formed symmetrically with respect to the longitudinal axis, and comprises an arc-shaped part (12), which is centered on the center axis (L), on one end side in the longitudinal axis direction,
wherein the base (4) is arranged such that the longitudinal axis is aligned with a tire circumferential direction and the base has a greater length (a) in the longitudinal axis direction than in the transverse axis direction in the plan view,
and the base (4) is formed with the arc-shaped part (12) at a rotational range which is larger than 180 degrees around the center axis (L).

2. The stud pin (1) according to claim 1, wherein the base (4), on the respective sides of the longitudinal axis in the plan view, comprises a pair of inclined parts (10) that are inclined toward the longitudinal axis as they each extend from the center axis (L) to another end side in the longitudinal axis direction, which is an opposite side from the one end side in the longitudinal direction.

3. The stud pin (1) according to claim 2, wherein the base (4) has, in the plan view, corners formed between the pair of inclined parts (10) and other elements (12, 30) connected thereto.

4. The stud pin (1) according to claim 3, wherein the pair of inclined parts (10) are positioned on the another end side in the longitudinal axis direction with respect to the transverse axis.

5. The stud pin (1) according to any one of claims 1 to 4, wherein the base (4) is formed in such a manner to extend from the body (2) in its whole circumference in the plan view.

6. The stud pin (1) according to any one of claims 1 to 5, wherein the body (2) comprises a tapered surface (7) on an upper-end periphery.

7. A pneumatic tire comprising:
the stud pin (1) according to any one of claims 1 to 6; and
pin holes (26) which are formed on a tread portion (25) and in which the stud pin (1) is mounted.

## Patentansprüche

1. Spikestift (1), der in einem Stiftloch (26) angebracht ist, das in einem Luftreifen gebildet ist, wobei der Spikestift (1) umfasst:
einen zylindrischen Körper (2),
einen Schaft (5), der von einem Ende in Mittelachsenrichtung des Körpers (2) vorsteht, und
eine Basis (4), die an dem anderen Ende in der Mittelachsenrichtung des Körpers (2) angeordnet ist, das ein gegenüberliegendes Ende zu dem einen Ende in der Mittelachsenrichtung ist, wobei die Basis (4) in Aufsicht in einer Längsachsenrichtung senkrecht zu der Mittelachse (L) und einer Querachse senkrecht zu der Mittelachse (L) hinsichtlich der Querachse asymmetrisch gebildet ist, hinsichtlich der Längsachse symmetrisch gebildet ist und an einem Ende in der Längsachsenrichtung einen bogenförmigen Teil (12) aufweist, der an der Mittelachse (L) zentriert ist,
wobei die Basis (4) derart angeordnet ist, dass die Längsachse mit einer Umfangsrichtung ausgerichtet ist und die Basis in der Aufsicht eine größere Länge (a) in der Längsachsenrichtung als in der Querachsenrichtung aufweist, und
die Basis (4) mit dem bogenförmigen Teil (12) mit einem Rotationsbereich gebildet ist, der größer ist als 180 Grad um die Mittelachse (L).

2. Spikestift (1) nach Anspruch 1, wobei die Basis (4) auf den jeweiligen Seiten der Längsachse in Aufsicht ein Paar von geneigten Teilen (10) aufweist, die in Richtung der Längsachse geneigt sind, wobei sie sich von der Mittelachse zu der anderen Endseite in der Längsachsenrichtung erstrecken, die eine gegenüberliegende Seite zu der einen Seite in der Längsrichtung ist.

3. Spikestift (1) nach Anspruch 2, wobei die Basis (4) in Aufsicht Ecken aufweist, die zwischen dem Paar von geneigten Teilen (10) und anderen Elementen (12, 30) gebildet sind, die damit verbunden sind.

4. Spikestift (1) nach Anspruch 3, wobei das Paar von geneigten Teilen (10) an der anderen Endseite in der Längsachsenrichtung hinsichtlich der Querachse positioniert ist.

5. Spikestift (1) nach einem der Ansprüche 1 bis 4, wobei die Basis (4) in einer derartigen Weise gebildet ist, dass sie sich von dem Körper (2) in dessen vollem Umfang in der Aufsicht erstreckt.

6. Spikestift (1) nach einem der Ansprüche 1 bis 5, wobei der Körper (2) eine gefaste Oberfläche (7) an einer oberen Endperipherie aufweist.

7. Luftreifen, mit:
dem Spikestift (1) nach einem der Ansprüche 1 bis 6, und
Stiftlöchern (26), die in einem Laufbereich (25) gebildet sind und in denen der Spikestift (1) angebracht ist.

## Revendications

1. Crampon (1) monté dans un trou (26) formé sur un pneumatique, le crampon (1) comprenant :
un corps (2) cylindrique ;
une tige (5) qui fait saillie à partir d'une extrémité dans une direction d'axe central du corps (2) ; et
une base (4) agencée sur une autre extrémité dans la direction d'axe central du corps (2), qui est une extrémité opposée à l'extrémité dans la direction d'axe central, dans lequel la base (4) est, dans une vue en plan, formée de manière asymétrique, par rapport à un axe transversal perpendiculaire à l'axe central (L), dans une direction d'axe longitudinal perpendiculaire à l'axe central (L) et l'axe transversal, est formée de manière symétrique par rapport à l'axe longitudinal, et comprend une partie arquée (12), qui est centrée sur l'axe central (L), sur un côté d'extrémité dans la direction d'axe longitudinal,
dans lequel la base (4) est agencée de sorte que l'axe longitudinal soit aligné sur une direction circonférentielle de pneu et la base a une longueur (a) plus grande dans la direction d'axe longitudinal que dans la direction d'axe transversal dans la vue en plan,
et la base (4) est formée avec la partie arquée (12) au niveau d'une plage de rotation qui est supérieure à 180 degrés autour de l'axe central (L).

2. Crampon (1) selon la revendication 1, dans lequel la base (4), sur les côtés respectifs de l'axe longitudinal dans la vue en plan, comprend une paire de parties inclinées (10) qui sont inclinées vers l'axe longitudinal tandis qu'elles s'étendent chacune à partir de l'axe central (L) vers un autre côté d'extrémité dans la direction d'axe longitudinal, qui est un côté opposé au côté d'extrémité dans la direction longitudinale.

3. Crampon (1) selon la revendication 2, dans lequel la base (4) a, dans la vue en plan, des coins formés entre la paire de parties inclinées (10) et d'autres éléments (12, 30) reliés à celle-ci.

4. Crampon (1) selon la revendication 3, dans lequel la paire de parties inclinées (10) sont positionnées sur l'autre côté d'extrémité dans la direction d'axe longitudinal par rapport à l'axe transversal.

5. Crampon (1) selon l'une quelconque des revendications 1 à 4, dans lequel la base (4) est formée de manière à s'étendre à partir du corps (2) dans toute sa circonférence dans la vue en plan.

6. Crampon (1) selon l'une quelconque des revendications 1 à 5, dans lequel le corps (2) comprend une surface effilée (7) sur une périphérie d'extrémité supérieure.

7. Pneumatique comprenant :
le crampon (1) selon l'une quelconque des revendications 1 à 6 ; et
des trous (26) qui sont formés sur une partie bande de roulement (25) et dans lesquels le crampon (1) est monté.
